(19) Europäisches Patentamt / European Patent Office / Office européen des brevets

(11) **EP 2 071 593 A1**

(12) **DEMANDE DE BREVET EUROPEEN**

(43) Date de publication:
**17.06.2009 Bulletin 2009/25**

(51) Int Cl.:
*H01F 1/01* (2006.01)   *B22F 9/04* (2006.01)

(21) Numéro de dépôt: **07291522.6**

(22) Date de dépôt: **14.12.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK RS**

(71) Demandeurs:
• **Imphy Alloys**
  **93200 Saint Denis (FR)**
• **Centre National de la Recherche Scientifique**
  **75794 Paris Cedex 16 (FR)**

(72) Inventeurs:
• **Waeckerle, Thierry**
  **58000 Nevers (FR)**
• **Fraisse, Hervé**
  **58000 Saint-Eloi (FR)**
• **Balli, Mohamed**
  **Résidence Universitaire Olympique - Bât. Allemand**
  **38100 Grenoble (FR)**

• **De Rango, Patricia**
  **38610 Gières (FR)**
• **Fruchart, Daniel**
  **38130 Echirolles (FR)**
• **Gignoux, Damien**
  **38700 La Tronche (FR)**
• **Miraglia, Salvatore**
  **38000 Grenoble (FR)**
• **Rosca, Mariana**
  **38000 Grenoble (FR)**
• **Artigas Alava, Miguel José**
  **50015 Zaragoza (ES)**

(74) Mandataire: **Plaisant, Sophie Marie**
  **ARCELOR France**
  **Arcelor Research Intellectual Property**
  **5 Rue Luigi Cherubini**
  **93212 La Plaine Saint-Denis Cedex (FR)**

(54) **Alliage Fe-Si-La présentant d'excellentes propriétés magnétocaloriques**

(57) L'invention concerne un alliage Fe-Si-La de composition atomique :

$$(La_{1-a-a'}Mm_aTR_{a'})_1[(Fe_{1-b-b'}Co_bM_{b'})_{1-x}(Si_{1-c}X_c)_x]_{13}(C_dN_eH_{1-d-e})_y(R)_z(I)_f$$

Mm représentant un mélange de lanthane, cérium, néodyme et praséodyme dans la proportion pondérale de 22 à 26% de La, 48 à 53% de Ce, 17 à 20% de Nd et 5 à 7% de Pr, ledit mélange pouvant en comprendre jusqu'à 1% en poids d'impuretés,
TR représentant un ou plusieurs éléments de la famille des terres rares autres que le lanthane,
M représentant un ou plusieurs éléments de transition de type d des couches 3d, 4d et 5d
X représentant un élément métalloïde choisi parmi Ge, Al, B, Ga et In
R représentant un ou plusieurs éléments choisis parmi Al, Ca, Mg, K et Na,
I représentant un ou deux éléments choisis parmi O et S,
avec :

$$0 \leq a < 0{,}5 \text{ et } 0 \leq a' < 0{,}2$$

$$0 \leq b \leq 0{,}2 \text{ et } 0 \leq b' < 0{,}4$$

EP 2 071 593 A1

$$0 \leq c \leq 0{,}5 \text{ et } 0 \leq d \leq 1$$

$$0 \leq e \leq 1 \text{ et } f \leq 0{,}1$$

$$0{,}09 \leq x \leq 0{,}13 \text{ et } 0{,}002 \leq y \leq 4$$

$$0{,}00005 \leq z \leq 0{,}1$$

les indices b, d, e, x et y étant tels que l'alliage satisfait en outre la condition suivante :

$$6{,}143b(13(1\text{-}x)) + 4{,}437y[1 - 0{,}0614(d + e)] \geq 1$$

Elle concerne également une poudre de cet alliage ou d'un mélange de ces alliages et le procédé de fabrication.

**Description**

La présente invention concerne un alliage Fe-Si-La présentant d'excellentes propriétés magnétocaloriques, plus particulièrement destinée à la fabrication d'éléments de réfrigération, sans pour autant y être limitée.

Un matériau magnétocalorique est un matériau magnétique qui réagit à la sollicitation d'un champ magnétique extérieur en changeant son niveau d'entropie magnétique. Cette variation d'entropie $\Delta S_m$ est transférée en interne au réseau des atomes de ce matériau, qui la convertisse en une agitation augmentée ou diminuée et donc en un réchauffement ou un refroidissement du matériau.

La variation d'entropie a lieu autour de la température de transition $T_t$, correspondant à la température de Curie pour les composés ferromagnétiques. La variation d'entropie $\Delta S_m$ produite à une température T sous l'application d'un champ H est obtenue en exploitant les réseaux de courbes d'aimantation M(T, H) autour de la température de transition $T_t$ selon :

$$\Delta S_m = \int_0^H \left( \frac{\delta M}{\delta T} \right).dH$$

Cette caractéristique $\Delta S_m(T)$ est quantifiée en deux grandeurs : l'amplitude maximale $\Delta S_{max}$ et la demi-largeur à mi-hauteur $\Delta T_{LMH}$. Elle permet également de calculer la capacité de refroidissement du matériau RCP = $\Delta T_{LMH} . \Delta S_{max}$.

Les calories ou les frigories générées peuvent alors être transférées vers une source chaude ou froide en utilisant un fluide caloporteur en contact alternativement avec la matière du matériau magnétocalorique pendant la partie du cycle d'aimantation ou de désaimantation.

On peut ainsi réaliser magnétiquement l'équivalent d'un cycle d'une machine thermique classique, mais sans polluant atmosphérique, ni bruits ou vibrations et surtout avec un rendement énergétique nettement supérieur à celui de l'effet Peltier ou d'un cycle thermodynamique classique.

On connait des matériaux à fort pouvoir magnétocalorique basés sur le composé cubique de formule La $(Fe_{1-x}Si_x)_{13}$ où x est préférentiellement compris entre 0 et 2, et dont la température de transition est généralement voisine de 200 K. Dans cette formule le lanthane peut être partiellement substitué par un autre élément de terre rare, le fer partiellement substitué par d'autres métaux de transition comme par exemple Cr, Mn, Co, Ni, et le silicium partiellement substitué par des éléments à électrons p comme par exemple Al, Ga, Ge.... Ces alliages présentent des transitions magnétiques très marquées au voisinage de la température de Curie accompagnées par une forte variation de l'entropie magnétique, réalisant ainsi un effet magnétocalorique géant. Par exemple, sous un champ magnétique de 2 Tesla, la variation de l'entropie magnétique dans l'alliage $La(Fe_{0.9}Si_{0.1})_{13}$ est égale à 24 J/Kg.K à 190 K. Ils présentent cependant l'inconvénient de manifester cet effet à basse température seulement (200 K). Pour les applications au voisinage de la température ambiante, l'utilisation de ces matériaux comme réfrigérants est impossible à cause de leur température de Curie trop basse.

Pour obtenir une réfrigération magnétique autour de l'ambiante, les matériaux de l'art antérieur performants sont notamment MnAs et certains composés au Ta + Hf. Cependant, l'arsenic est un élément très toxique que l'on souhaite éviter et le tantale et l'hafnium sont difficiles à élaborer.

Il existe donc un besoin pour un matériau ne contenant pas d'éléments dangereux à toucher ou inhaler lors de l'élaboration qui présente une température de transition $T_{tr}$ dans une plage de valeur d'usage allant de -50°C à +70°C, correspondant ainsi à la grande majorité des cas de réfrigération actuels ou futurs.

Les aimants actuels permettant d'obtenir facilement des champs magnétiques ayant une intensité de 0.5 à 2T, il faut aussi que ce matériau présente un fort pouvoir magnétocalorique tel que $\Delta S_{max} > 1$ J/kg.K et de préférence $\Delta S_{max} > 3$ J/kg.K, sous un champ magnétique appliqué d'au plus 2T, pour obtenir des systèmes simples, économiques et énergétiquement efficaces.

En outre, on recherche un matériau présentant une variation d'entropie magnétique qui ne se manifeste pas sous la forme d'un pic intense sur une plage très réduite de température, mais sur une plage d'au moins 10K, permettant le refroidissement du système environnant sur une étendue large de température. L'amplitude de température de la transition, définie par la largeur du pic de variation d'entropie à mi-hauteur pic $2\Delta T_{LMH}$ doit donc être supérieure ou égale à 20K, soit une valeur de $\Delta T_{LMH}$ supérieure ou égale à 10K.

Il est enfin souhaitable que le matériau ne présente pas de vieillissement lors de son utilisation et qu'il ait une faible hystérésis thermique des matériaux, inférieure à 8K et de préférence inférieure à 5K.

La présente invention vise à mettre à disposition un tel matériau.

Un premier objet de l'invention est ainsi constitué par un alliage Fe-Si-La de composition atomique :

$$(La_{1-a-a'}Mm_aTR_{a'})_1[(Fe_{1-b-b'}Co_bM_{b'})_{1-x}(Si_{1-c}X_c)_x]_{13}(C_dN_eH_{1-d-e})_y(R)_z(I)_f$$

Mm représentant un mélange de lanthane, cérium, néodyme et praséodyme dans la proportion pondérale de 22 à 26% de La, 48 à 53% de Ce, 17 à 20% de Nd et 5 à 7% de Pr, ledit mélange pouvant en comprendre jusqu'à 1% en poids d'impuretés,

TR représentant un ou plusieurs éléments de la famille des terres rares autres que le lanthane,

M représentant un ou plusieurs éléments de transition de type d des couches 3d, 4d et 5d

X représentant un élément métalloïde choisi parmi Ge, Al, B, Ga et In

R représentant un ou plusieurs éléments choisis parmi Al, Ca, Mg, K et Na,

I représentant un ou deux éléments choisis parmi O et S, avec :

$$0 \le a < 0,5 \text{ et } 0 \le a' < 0,2$$

$$0 \le b \le 0,2 \text{ et } 0 \le b' < 0,4$$

$$0 \le c \le 0,5 \text{ et } 0 \le d \le 1$$

$$0 \le e \le 1 \text{ et } f \le 0,1$$

$$0,09 \le x \le 0,13 \text{ et } 0,002 \le y \le 4$$

$$0,00005 \le z \le 0,1$$

les indices b, d, e, x et y étant tels que l'alliage satisfait en outre la condition suivante :

$$6,143b(13(1\text{-}x)) + 4,437y[1 - 0,0614(d + e)] \ge 1$$

L'alliage selon l'invention peut en outre comprendre des caractéristiques additionnelles, prises seules ou en combinaison :

- M peut représenter un ou plusieurs éléments choisis parmi le nickel, le manganèse et le chrome,
- R peut représenter le calcium,
- On peut avoir a = 0, a' = 0, b = 0, b' = 0 et c = 0.
- TR peut représenter le cérium et/ou l'yttrium,
- On peut avoir d < 0,01,
- On peut avoir d ≥ 0,7.

Un second objet de l'invention est constitué par une poudre d'alliage Fe-Si-La selon l'invention, dont la granulométrie moyenne est inférieure à 1000 μm et de préférence inférieure à 500 μm.

Un troisième objet de l'invention est constitué par un procédé de fabrication d'une poudre d'alliage selon l'invention, comprenant les étapes consistant à :

- élaborer un précurseur de l'alliage selon l'invention, dont au moins une des teneurs en carbone et/ou azote et/ou hydrogène est inférieure à celle de l'alliage final, y pouvant être égal à 0,

- le couler et le solidifier sous forme de lingot,
- procéder éventuellement à une refusion sous laitier ou sous vide,
- fragmenter le lingot en une poudre de particules,
- procéder à un traitement thermique d'homogénéisation à l'air ou sous gaz protecteur sur l'alliage soit juste avant, soit juste après son fractionnement, et
- procéder à un traitement de diffusion sur ladite poudre d'au moins un des éléments choisis parmi le carbone, l'hydrogène et l'azote, afin d'obtenir une poudre d'alliage présentant la composition finale visée.

Dans un mode de réalisation préféré, le procédé selon l'invention peut comprendre les étapes suivantes consistant à :

- couler et solidifier ledit précurseur sous forme de lingot, au moins une des opérations suivantes étant en outre pratiquée :

  ■ maintenir le lingot fraichement solidifié à une température supérieure à 1300°C mais inférieur au point de fusion, pendant moins de 24 heures,
  ■ opérer un brassage électromagnétique au cours de la coulée en lingot et lors de la solidification,
  ■ réchauffer le lingot après sa première solidification à une température supérieure à 1300°C de telle sorte qu'il repasse au moins partiellement à l'état liquide, puis le solidifier à nouveau,

- fragmenter le lingot en une poudre de particules,
- procéder à un traitement de diffusion sur ladite poudre d'au moins un des éléments choisis parmi le carbone, l'hydrogène et l'azote, afin d'obtenir une poudre d'alliage présentant la composition finale visée.

Il peut étalement comprendre les étapes consistant à :

- fragmenter ledit lingot en une poudre de particules de taille inférieure à 10 mm
- procéder à un traitement de fragmentation fine et d'homogénéisation sous hydrogène à une température inférieure à 300°C pour obtenir une poudre de particules de taille inférieure à 1000 $\mu$m,
- procéder à un traitement de diffusion sur ladite poudre, à une température inférieure à 400°C, d'au moins un des éléments choisis parmi le carbone, et l'azote, afin d'obtenir une poudre d'alliage présentant la composition finale visée.

Dans un autre mode de réalisation, le procédé de fabrication d'une poudre d'alliage selon l'invention comprend les étapes consistant à :

- élaborer un précurseur de l'alliage selon l'invention, dont au moins une des teneurs en carbone et/ou azote et/ou hydrogène est inférieure à celle de l'alliage final, y pouvant être égal à 0,
- l'atomiser sous forme fondue, sans solidification préalable, afin d'obtenir une poudre de particules et
- procéder à un traitement de diffusion sur ladite poudre d'au moins un des éléments choisis parmi le carbone, l'hydrogène et l'azote, afin d'obtenir une poudre d'alliage présentant la composition finale visée.

Dans un autre mode de réalisation, le procédé de fabrication d'alliage selon l'invention, comprend les étapes consistant à :

- élaborer un précurseur de l'alliage selon l'invention, au moins une des teneurs en carbone et/ou azote et/ou hydrogène est inférieure à celle de l'alliage final, y pouvant être égal à 0,
- le solidifier sous forme de ruban, de fil ou de poudre de particules par hypertrempe et
- procéder à un traitement de diffusion sur ledit ruban, ledit fil ou ladite poudre d'au moins un des éléments choisis parmi le carbone, l'hydrogène et l'azote, afin d'obtenir un ruban, un fil ou une poudre d'alliage présentant la composition finale visée.

L'invention concerne encore une poudre d'alliages Fe-Si-La, comprenant au moins deux alliages différents $A_1$ et $A_2$ selon l'invention, choisis de sorte que les températures de transition $Ttr_1$, $Ttr_2$ et les largeurs de pics à mi-hauteur $\Delta T_{LMH1}$, $\Delta T_{LMH2}$ de leurs courbes respectives de variation d'entropie magnétique $\Delta S_{m1}(T)$ et $\Delta S_{m2}(T)$ soient telles que leurs plages de travail respectives $(Ttr_1 - \Delta T_{LMH1} ; Ttr_1 + \Delta T_{LMH1})$ et $(Ttr_2 - \Delta T_{LMH2}; Ttr_2 + \Delta T_{LMH2})$ se recoupent.
Dans un mode de réalisation préféré, la poudre d'alliages est telle que lesdits alliages $A_1$ et $A_2$ sont obtenus à partir du même matériau précurseur P soumis à deux traitements différents de diffusion d'au moins un des éléments choisis parmi le carbone, l'hydrogène et l'azote.

L'invention concerne enfin un matériau précurseur permettant la fabrication d'alliages selon l'invention et ne s'en distinguant que par les teneurs en carbone et/ou azote et/ou hydrogène.

La famille d'alliages selon l'invention présente donc une composition, en % atomique, selon la formule suivante :

$$(La_{1-a-a'}Mm_aTR_{a'})_1[(Fe_{1-b-b'}Co_bM_{b'})_{1-x}(Si_{1-c}X_c)_x]_{13}(C_dN_eH_{1-d-e})_y(R)_z(I)_f$$

Mm représente un mélange de lanthane, cérium, néodyme et praséodyme dans la proportion pondérale de 22 à 26%de La, 48 à 53% de Ce, 17 à 20% de Nd et 5 à 7% de Pr, ledit mélange pouvant comprendre jusqu'à 1% en poids d'impuretés. L'utilisation de Mm (ou Misch-metall) composé essentiellement de terres rares et qu'on trouve en abondance, permet une élaboration industrielle plus facile, et un apport avantageux dans les propriétés magnétocaloriques grâce en particulier à ses fortes teneurs en cérium et lanthane.

TR représente un ou plusieurs éléments de la famille des terres rares autres que le lanthane. On citera en particulier les éléments Y, Ce, Pr, Nd, Sm, Eu, Gd, Tb, Dy, Ho, Er, Tm, Yb et de préférence le cérium et/ou l'yttrium.

M représente un ou plusieurs éléments de transition de type d des couches 3d, 4d et 5d et en particulier le nickel, le manganèse et/ou le chrome, qui peuvent venir en substitution partielle du fer, afin de modifier plus précisément la température de transition $T_{tr}$.

X représente un élément métalloïde choisi parmi Ge, Al, B, Ga et In, pouvant venir en substitution du silicium, afin d'élargir le pic $\Delta S_m(T)$, c'est à dire augmenter la valeur de $\Delta T$.

R représente un ou plusieurs éléments réducteurs choisis parmi Al, Ca, Mg, K ou Na. Le contrôle de ces éléments est très important pour obtenir de bonnes propriétés magnétocaloriques, car ils gênent considérablement l'oxydation des éléments de terres rares telles que le lanthane et le cérium, par exemple, pendant la phase de fusion à arc ou par induction des matériaux. Grâce à leur présence, très peu de terres rares sont transformés en oxydes et une très forte proportion de ces éléments pourra donc jouer la fonction magnétocalorique attendue dans le matériau final. On choisit donc d'ajouter à dessein ces éléments réducteurs dans le bain liquide pour former leurs oxydes avec le risque d'en conserver une partie dans le matériau final, plutôt que d'oxyder une partie des terres rares ce qui rendrait le rendement d'élaboration moins bon et dégraderait significativement les performances magnétocaloriques finales.

En outre, ces éléments, qui sont de forts réducteurs limitent également la réduction des briques de céramiques des creusets des fours de fusion par les terres rares à des températures supérieures à 1000°C améliorant ainsi encore le rendement matière du procédé de fabrication ainsi que l'atteinte précise de la composition visée.

I représente un ou deux éléments choisis parmi l'oxygène et le soufre. Ces éléments sont des poisons car ils se combinent facilement avec les terres rares durant la fusion et la solidification et donc les neutralisent vis à vis de leur capacité magnétocalorique. On cherchera donc à en limiter la teneur autant que possible. Ceci peut notamment être réalisé en utilisant des matières premières pures, ainsi qu'en employant un procédé d'élaboration de type fusion sous vide ou sous atmosphère contrôlée ou sous laitier protecteur et réducteur. On peut également procéder à un traitement thermique d'homogénéisation chimique, basse température, non oxydant (gaz inerte ou réducteur comme de l'hydrogène ou peu oxydant comme du carbone ou de l'azote à basse température).

Les alliages selon l'invention contiennent un ou plusieurs éléments interstitiels diffusants à basse température choisis parmi le carbone, l'azote et l'hydrogène. Le carbone et l'azote sont des éléments désoxydants qui ont notamment pour action de limiter l'activité de l'oxygène dans le bain de métal liquide et ainsi, ce faisant, l'oxydation des terres rares et donc aussi une forte réduction de la dérive de composition entre composition visée et composition réelle du matériau solide. On préfère plus particulièrement utiliser le carbone pour cette désoxydation.

En outre, le carbone, l'azote et l'hydrogène, ont une influence sur les propriétés magnétocaloriques des matériaux selon l'invention. Cette influence a été étudiée plus en détail et est représentée sous la forme des figures 1 à 3 qui montrent :

- figure 1 : variation de l'aimantation magnétique M en fonction de la température T sous un champ de 5T pour des alliages $TR_1(Fe_xSi_{1-x})_{13}Ca_{0,00006}O_{0,0088}$,
- figure 2: variation de l'entropie magnétique en fonction de la température T sous un champ de 5T pour des alliages hydrurés $La(Fe_xSi_{1-x})_{13}H_yCa_{0,00006}O_{0,0088}$,
- figure 3 : variation de l'entropie magnétique en fonction de la température T sous différents champs de 1 à 5T pour l'alliage nitruré $LaFe_{11,7}Si1_{1,3}N_{1,3}\,Ca_{0,00006}O_{0,0088}$.

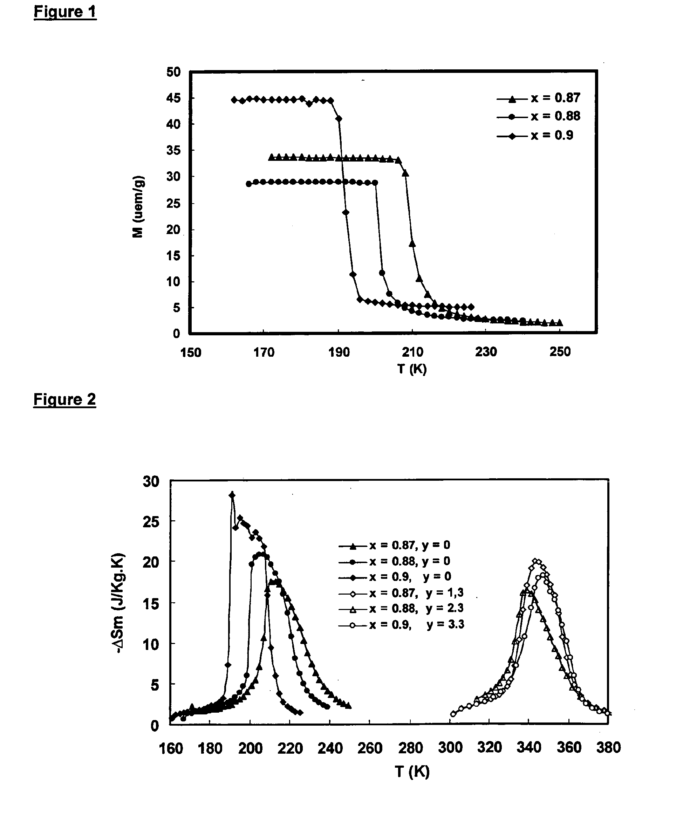

Si on considère la figure 1, on constate que dans les matériaux ne comprenant pas d'éléments interstitiels (C, N, H) la température de transition $T_{tr}$ n'atteint jamais 220K lorsqu'on fait varier le rapport Fe/Si dans l'étroite plage (x=0,90 à 0,87) où on obtient des performances magnétocaloriques intéressantes. L'ajout de ces éléments est donc essentiel.

Si on considère à présent la figure 2, on constate que l'insertion d'hydrogène à forte teneur accroit sensiblement la température de transition $T_{tr}$ de 200 à 340K, tout en dégradant très modérément les performances magnétocaloriques.

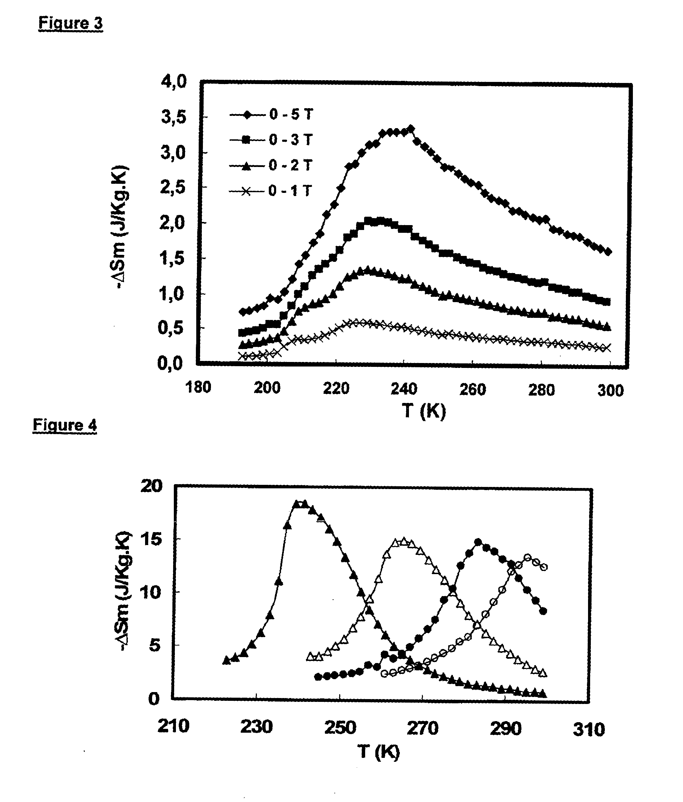

Si on considère à présent la figure 3, on constate que l'insertion d'azote à forte teneur accroit modérément la température de transition $T_{tr}$ de 200 à 230K, tout en étendant considérablement la plage de température de travail MCE ($\Delta T_{LMH}$ = 60K à 2T). La température de transition magnétique, ainsi que l'étendue en température du phénomène magnétocalorique peuvent donc être avantageusement déplacée par insertion d'azote et formation de nitrures. Ceci permet de maîtriser la réfrigération magnétique dans un intervalle de température très étendu, par exemple de 210 à 330 K, en utilisant un alliage précurseur unique que l'on nitrurera plus ou moins.

L'effet magnétocalorique peut ainsi être induit à des températures supérieures à l'ambiante. En outre, avec les nitrures on obtient toujours un phénomène magnétocalorique supérieur en intensité à celui induit avec les alliages précurseurs de départ, non nitrurés.

Par ailleurs, les présents inventeurs ont aussi découvert que, en plus de la présence de ces éléments interstitiels, la composition des alliages selon l'invention doit vérifier la relation suivante pour garantir une température de transition $T_{tr}$ d'au moins 220K:

$$6{,}143b(13(1\text{-}x)) + 4{,}437y[1 - 0{,}0614(d + e)] \geq 1$$

Comme indiqué par la formule générale, le fer de l'alliage selon l'invention peut être substitué par du cobalt. L'influence du cobalt a été étudiée plus en détail, ce qui fait l'objet de la figure 4 qui représente la variation de l'entropie magnétique en fonction de la température T sous un champ de 5T pour les alliages $LaFe_{11.3}Co_{0.4}Si_{1.31}Ca_{0,00006}O_{0.0088}$, $LaFe_{11.1}Co_{0.6}Si_{1.31}Ca_{0,00006}O_{0.0088}$ $LaFe_{11.1}CO_{0.8}Si_{1.11}Ca_{0,00006}O_{0.0088}$, $LaFe_{11}Co_{0.9}Si_{1.1}Ca_{0,00006}O_{0.0088}$ (respectivement de gauche à droite sur la figure).

On voit que lorsqu'on substitue 3,4% à 7,6% du fer de l'alliage par du cobalt, la température de transition $T_{tr}$ croît de respectivement 240 à 295K, tout en dégradant modérément les performances magnétocaloriques. La substitution du fer par le cobalt permet donc de mieux contrôler et augmenter la température de Curie vers la température ambiante et de couvrir ainsi une large gamme de réfrigération qui va de 240 à 300 K avec l'effet magnétocalorique des réfrigérants qui reste bien plus important que pour les matériaux de l'art antérieur tel que le gadolinium.

D'une façon avantageuse, les matériaux selon l'invention peuvent se présenter sous la forme d'une poudre formée de particule de taille inférieure à 1000$\mu$m, de préférence inférieure à 500$\mu$m, et de façon plus particulièrement préférée inférieure à 200$\mu$m, voire inférieure à 100 $\mu$m. En effet, la faible dimension des particules permet d'obtenir un matériau qui favorise les échanges thermiques et en particulier l'extraction rapide des frigories vers un fluide caloporteur. A cet effet, on pourra également utiliser le matériau selon l'invention sous la forme d'une tôle mince, ou d'un fil, par exemple en formant un composite mêlant cette poudre en proportion majoritaire avec un liant organique; plastique, végétal ou métallique.

Afin de permettre une exploitation industrielle du matériau selon l'invention, la composition de l'alliage précurseur doit être homogène et obtenue de façon précise par rapport à la visée théorique. Le procédé d'élaboration doit être compatible avec la nécessité de parfaitement homogénéiser chimiquement les particules afin d'obtenir en tout point les proportions stoechiométriques du composé et ainsi les performances magnétocaloriques attendues.

On pourra ainsi utiliser une première variante de procédé de fabrication par voie lingot suivi d'un concassage-broyage. On procède à une élaboration par induction sous vide (ou gaz neutre) ou par arc sous laitier protecteur pour coulée en lingot, puis éventuellement à une refusion sous laitier (ESR: Electrode Slag Remelting) ou sous vide (VAR: Vacuum Arc Remelting) en lingot. Le matériau élaboré, qu'on appelle précurseur, présente la composition finale visée pour l'ensemble des éléments, à l'exception du carbone, de l'hydrogène et/ou de l'azote dont les teneurs finales seront réglées lors du post-traitement de diffusion.

On procède ensuite à un traitement thermique haute température pour homogénéisation chimique (1100 à 1400°C - 10h à 10 jours) à l'air ou sous gaz protecteur; ce traitement pouvant aussi être réalisé ultérieurement sur les poudres plutôt que sur le lingot. Ce traitement a pour objet tout particulièrement de réduire le Fer ou Cobalt libre (c'est à dire non incorporé dans le composé selon l'invention) à au plus quelques pourcents atomiques (typiquement moins de 5at%) et ainsi d'atteindre les performances magnétocaloriques recherchées.

Ce lingot est ensuite fragmenté en bloc par concasseur puis en particules submillimétriques par broyeur haute énergie.

On pourra également envisager différentes variantes possibles de transformation mécanique en poudre à partir de lingot ou de bloc et notamment :

- concassage par impact,

- attrition (frottement entre particules) entre particules et pièces en mouvement,
- attrition par auto-impact (deux jets de poudre sont envoyés l'un contre l'autre),
- technique par jet froid envoyant les particules être éclatées sur une cible par un flux de gaz froid,
- attrition haute énergie appelée "alliation mécanique",
- cisaillement (par broyage-écrasement),
- compression.

Une variante intéressante du procédé selon l'invention consiste à s'affranchir du traitement thermique haute température après élaboration et coulée en lingot, qui est peu productif, car très long. Cela peut notamment être réalisé par l'une ou l'autre des opérations décrites ci-dessous, utilisées isolément ou en combinaison :

■ maintenir le lingot fraichement solidifié à une température supérieure à 1300°C mais inférieure au point de fusion (proche du liquidus), pendant moins de 24 heures,
■ opérer un brassage électromagnétique au cours de la coulée en lingot et lors de la solidification,
■ réchauffer le lingot après sa première solidification à une température supérieure à 1300°C de telle sorte qu'il repasse au moins partiellement à l'état liquide, puis le solidifier à nouveau, et ainsi homogénéiser par des aller-retour successifs en température.

Cette variante a ainsi été testée en réalisant des essais par fusion à haute fréquence de lingots selon l'invention, puis maintien de ces lingots immédiatement sous la température de fusion (1350°C environ) pendant un temps défini.

Ainsi, pour un traitement thermique de deux heures le taux de fer libre résultant est voisin de 4-5% at., et devient très intéressant pour une durée de 4 heures, puisque voisin de 2% at. seulement. Un recuit plus long conduit à diminuer encore ce taux.

Cette variante permet notamment de réaliser rapidement de larges masses de composés selon l'invention de très bonne qualité, à partir d'un traitement thermique appliqué immédiatement suivant la fusion et de courte durée.

Une autre variante intéressante du procédé selon l'invention pour s'affranchir du traitement thermique haute température après élaboration, consiste à passer directement du stade de lingot brut d'élaboration à un état fragmenté intermédiaire (millimétrique ou submillimétrique), puis de réaliser un traitement spécifique dit de "décrépitation" sous hydrogène permettant à la fois une transformation du lingot en particules de petite taille (typiquement inférieures à 1000 $\mu$m), l'hydruration complète ou partielle des particules et une homogénéisation chimique facile et rapide. La diffusion ultérieure éventuelle de carbone et/ou d'azote s'en trouvera en outre facilitée.

Ce recuit de décrépitation sous hydrogène doit se faire à une température inférieure à 300°C et de préférence comprise entre 200 et 250°C, sous une pression d'hydrogène généralement supérieure à 1 atm (de préférence supérieure à 3 atm) et permet d'obtenir des poudres fines.

On peut alors éventuellement appliquer un post-traitement thermique de réglage des propriétés par insertion de carbone et/ou d'azote par un recuit à moins de 400°C, Ce traitement devra cependant être suffisamment rapide pour permettre l'insertion de carbone et d'azote tout en évitant qu'une réaction de démixtion du composé en fer (ou cobalt) ne se produise dans des proportions telles que l'on forme un nitrure ou un carbure de lanthane.

L'utilisation de particules fines obtenues par décrépitation permet d'opérer plus sûrement, car la diffusion des éléments légers se faisant par propagation d'interface, la réaction d'insertion est achevée dès 390°C grâce à une meilleure cinétique, et ce avant que la réaction de démixtion qui commence à 410°C, ne puisse avoir lieu.

Il est ainsi possible de préparer des carbures et nitrures d'excellente qualité contenant deux à trois fois moins de fer en impureté que lors des réactions directes avec le carbone ou l'azote, la taille réduite des particules empêchant l'engagement de la réaction de démixtion avant que la réaction d'insertion ne soit terminée.

On pourra également utiliser une autre variante de procédé de fabrication par voie d'atomisation en poudre à partir de métal fondu issu d'une élaboration haute fréquence par induction sous vide ou à arc sous laitier ou encore d'une électrode pré-élaborée.

On pourra ainsi envisager différentes variantes possibles d'atomisation :

- atomisation par gaz : le métal liquide est injecté sous pression dans une chambre sous vide ou gaz protecteur et interagissant fortement avec un jet gazeux grande vitesse, produisant une vaporisation de fines gouttelettes vite refroidies,
- atomisation par liquide: identique au cas précédent où le gaz grande vitesse est remplacé par un jet de liquide sous haute pression,
- atomisation centrifuge par anode tournante pré-élaborée en alliage de matériau selon l'invention formant un plasma sous arc avec une cathode faisant face à l'extrémité de l'anode tournante,
- variantes possibles de l'atomisation par anode tournante: disque tournant, creuset tournant, électrode vibrante,
- explosion de bain.

On pourra également utiliser une troisième variante de procédé de fabrication par voies proches de l'atomisation, c'est à dire par refroidissement violent du métal liquide suivant au moins une direction de la particule ou du ruban ou du fil formé (hypertrempe). On pourra ainsi utiliser :

- la trempe sur roue : technique bien connue pour la production d'amorphes ou de matériau micro cristallisés en rubans de faible épaisseur (20-50$\mu$m)
- la trempe dans l'eau: technique bien connue pour la production d'amorphes

ou de matériau micro cristallisés en fils de faible diamètre (20-50$\mu$m)

- la trempe dans gaz froid ou liquéfié.

Quel que soit le procédé utilisé pour mettre en oeuvre l'invention, il sera préféré une technologie où l'élaboration du matériau en parties finement divisées (appelé précurseur) est disjointe d'un post-procédé qui règle précisément la température de transition $T_{tr}$ à la valeur désirée. La production est ainsi beaucoup plus robuste puisque les aléas de l'élaboration peuvent être en grande partie rattrapés par le post-procédé de réglage de $T_{tr}$.

Ce post-procédé peut consister en un procédé de traitement thermique basse température d'espèces diffusantes (C, N, H), obtenu par réaction solide-gaz au dessus des particules homogénéisées chimiquement au préalable et issues de la première partie du procédé.

Les nitrures peuvent ainsi être réalisés par réaction solide-gaz, soit à partir d'azote moléculaire ou à partir d'ammoniac. La réaction menée préférentiellement sur les matériaux pulvérulents, est réalisée de préférence dans un intervalle de température, allant de 300 à 400°C.

## Essais

Les précurseurs d'alliages sont élaborés par fusion par induction haute fréquence sous vide puis atomisés sous vide. On obtient ainsi une poudre de particules de diamètre compris entre 50 et 100$\mu$m, à faible ségrégation chimique à laquelle on fait subir un traitement thermique d'homogénéisation de 5h à 1200°C sous hydrogène pur pour obtenir une série de matériaux précurseurs.

On donne à titre indicatif dans le tableau 1 les compositions des matériaux précurseurs avant qu'ils soient soumis aux traitements de diffusion du carbone et/ou de l'azote et/ou de l'hydrogène ainsi que les compositions des matériaux finaux obtenus après ces traitement de diffusion.

**Tableau 1 - Composition des précurseurs**

| N° | Type | Précurseur | Matériau final | $T_{tr}$ (K) |
|----|------|------------|----------------|--------------|
| 1 | Comp | $La_1[Fe_{0,87}Si_{0,13}]_{13}(C_{0,8}N_{0,2})_{0,01}$ $Ca_{0,001}O_{0,0025}$ | $La_1[Fe_{0,87}Si_{0,13}]_{13}(C_{0,8}N_{0,2})_{0,01}$ $Ca_{0,001}O_{0,0025}$ | <u>210</u> |
| 2 | Inv | $La_1[Fe_{0,87}Si_{0,13}]_{13}(C_{0,8}N_{0,2})_{0,01}$ $Ca_{0,0012}O_{0,0033}$ | $La_1[Fe_{0,87}Si_{0,13}]_{13}(C_{0,008}N_{0,992})_1$ $Ca_{0,0012}O_{0,0033}$ | 252 |
| 3 | Inv | $La_1[Fe_{0,87}Si_{0,13}]_{13}(C_{0,8}N_{0,2})_{0,01}$ $Ca_{0,0017}O_{0,0037}$ | $La_1[Fe_{0,87}Si_{0,13}]_{13}(C_{0,008}N_{0,002}H_{0,99})_{1,3}$ $Ca_{0,0017}O_{0,0037}$ | 338 |
| 4 | Comp | $La_{0,96}[Fe_{0,87}Si_{0,13}]_{13}(C_{0,8}N_{0,2})_{0,01}$ $Ca_{0,00006}O_{0,0088}$ | $La_{0,96}[Fe_{0,87}Si_{0,13}]_{13}(C_{0,008}N_{0,002}H_{0.99})_{1,3}$ $Ca_{0,00006}O_{0,0088}$ | 331 |

On notera qu'à l'état de précurseur, les matériaux contiennent déjà une teneur résiduelle en carbone et en azote ce qui permet de limiter l'activité d'oxygène dans le bain liquide et donc l'oxydation significative dans le bain des éléments les plus réducteurs, tels que les terres rares, le calcium ou le magnésium.

Les poudres sont ensuite soumises à un traitement à basse température de nitruration sous $N_2$ entre 300 et 400°C, ou hydrogénées à 200-300°C pendant quelques heures, en fonction des alliages visés.

Les poudres de précurseur contenant déjà du carbone et de l'azote, le traitement ultérieur, basse ou moyenne température, de nitruration ou d'hydrogénation, permet de donner à la poudre finale sa composition définitive, donnée dans le tableau 2.

**Tableau 2 - Compositions finales**

| Alliage N° | Type | Coefficients de la formule chimique générale du brevet | | | | | | | | | | |
|---|---|---|---|---|---|---|---|---|---|---|---|---|
| | | a | a' | b | b' | x | c | d | e | y | z | f |
| 1 | Comp. | 0 | 0 | 0 | 0 | 0,13 | 0 | 0,8 | 0,2 | 0,01 | 0,001 | 0,0025 |
| 2 | Inv | 0 | 0 | 0 | 0 | 0,13 | 0 | 0,008 | 0,992 | 1 | 0,0012 | 0,0033 |
| 3 | Inv | 0 | 0 | 0 | 0 | 0,13 | 0 | 0,008 | 0,002 | 1,3 | 0,0017 | 0,0037 |
| 4 | Comp. | 0 | 0 | 0 | 0 | 0,13 | 0 | 0,008 | 0,002 | 1,3 | 0,00006 | 0,0088 |

Les matériaux selon l'invention ont ensuite fait l'objet de tests pour vérifier leurs propriétés magnétocaloriques et on a en particulier déterminé leurs courbes d'aimantation M en fonction du temps T et de l'enthalpie H.

Les courbes d'aimantation M(T, H) sont obtenues au moyen d'un magnétomètre à extraction, pouvant balayer des plages de température suivant l'appareil de 1,5 à 300K, ou de 300 à 900K. L'échantillon de poudre est compacté dans un cylindre amagnétique de type inox austénitique, qui est placé dans le champ de la bobine supraconductrice et déplacé dans un dispositif de détection de flux magnétique constitué de deux bobines (détectant des flux magnétiques de sens opposé) montées en série. Lors du déplacement de l'échantillon du centre d'une bobine de mesure vers le centre de la deuxième bobine, on intègre la tension induite, proportionnelle à l'aimantation M de l'échantillon.

A partir des courbes M(T, H) ainsi obtenues, on détermine par intégration numérique au moyen de la formule ci-dessous les valeurs $\Delta S_m(T)$ d'entropie :

$$\Delta S_m = \int_0^H \left( \frac{\delta M}{\delta T} \right) . dH$$

Les résultats des tests sont rassemblés dans le tableau 3.

**Tableau 3 - Résultats**

| Alliage N° | Type | Déséquilibre par rapport à la visée de composition | Dépôt d'oxydes de TR sur les parois des creusets | Mesures à 2T | | | RCP (J/kg) |
|---|---|---|---|---|---|---|---|
| | | | | $T_{tr}$ (°K) | $\Delta T_{LMH}$ (°K) | $\Delta S_{max}$ (J/kg.K) | |
| 1 | Comp | 1 | Très faible | <u>210</u> | 14,4 | 12,5 | 180 |
| 2 | Inv | 1 | 0 | 252 | 72 | 2,1 | 151 |
| 3 | Inv | 1 | 0 | 338 | 11 | 11,5 | 126,5 |
| 4 | Comp | <u>0,96</u> | <u>important</u> | 331 | 16 | 3,5 | 54 |

On constate qu'en l'absence de cobalt, il faut un minimum d'azote ou d'hydrogène pour que la transition se produise à une température supérieure à 220K: ceci est d'ailleurs décrit dans l'invention par l'équation 1. L'alliage 1 montre que trop peu de carbone et d'azote ne permet pas d'atteindre 220K alors que le calcium est suffisant pour oxyder de façon négligeable les terres rares et obtenir précisément la composition visée, et donc aussi les performances magnétocaloriques optimales.

Un minimum de calcium, par exemple, assure que la quasi-totalité des terres rares comme le lanthane resteront dans le bain liquide et le lingot solidifié, ce qui permet ainsi une très bonne correspondance entre la composition visée et la composition obtenue, et donc des bonnes performances magnétocaloriques. L'alliage n°4 possède très peu de calcium et en conséquence quelques pourcents de l'ensemble des atomes de terres rares se retrouvent sous forme d'oxyde, perdus pour les propriétés magnétocaloriques, avec pour conséquence essentielle de dévier du rapport 1:13 entre les terres rares et les autres éléments du réseau en substitution ce qui entraine une baisse importante des propriétés magnétocaloriques.

A noter que les performances magnétocaloriques de l'alliage n°4 restent encore intéressantes, mais du point de vue de l'aptitude à l'élaboration industrielle, sa trop basse teneur en éléments réducteurs rend l'alliage versatile avec une grande variabilité de composition obtenue pour une seule composition visée (déviation réalisé/visé de 0,96).

On constate également, d'une part que la nitruration et l'hydruration accroissent la température de transition

$T_{tr}$ au dessus de 220K et, d'autre part que ce comportement reste valable en présence de calcium ajouté pour stabiliser la composition du bain liquide et empêcher la transformation d'une partie des terres rares en oxydes. De plus alors que l'hydruration dégrade un peu la plage de température de travail (11 K au lieu de 14,4K) mais accroit considérablement $T_{tr}$ (de 128K sur l'alliage n°3 par rapport à l'alliage n°1), la nitruration, au contraire, accroit un peu la température de transition (de 42K) mais étend considérablement la plage de température de travail tandis que l'entropie maximum sous 2T décroît fortement, mais la capacité de refroidissement du matériau (RCP = $\Delta T_{LMH}$. $\Delta S_{max}$) reste quasiment inchangée (151 au lieu de 180 J/kg) et est même supérieure à celle du matériau hydruré.

On a ensuite procédé à une seconde série d'essais sur des matériaux à forte teneur en carbures. Les matériaux sont élaborés par fusion par induction haute fréquence sous vide et coulés en lingots, produisant de fortes ségrégations chimiques. Les lingots sont ensuite fragmentés en blocs au concasseur, puis en particules millimétriques au broyeur centrifuge. Les particules sont ensuite soumises à un traitement thermique d'homogénéisation à lit fluidisé-alumine à 1300°C sous argon durant 24 heures. Les particules, homogénéisées chimiquement, sont ensuite broyées plus finement en poudre de diamètre $100\pm50$ $\mu$m puis soumises à un traitement thermique basse température de carburation par craquage de $CH_4$ à une température inférieure à 800°C durant 10 heures.

Les compositions finales des matériaux obtenus sont rassemblées dans le tableau 4.

**Tableau 4 - Compositions finales**

| N° | Type | Coefficients de la formule chimique générale | | | | | | | | | | |
|----|------|------|------|-------|------|-------|------|------|------|------|---------|--------|
| | | a | a' | b | b' | x | c | d | e | y | z | f |
| 5 | Comp | 0 | 0 | 0 | 0 | 0,13 | 0 | 0,8 | 0,2 | 0,01 | 0,001 | 0,0025 |
| 6 | Comp | 0 | 0 | 0 | 0 | 0,12 | 0 | 0,7 | 0,3 | 0,01 | 0,0012 | 0,0022 |
| 7 | Comp | 0 | 0 | 0 | 0 | 0,10 | 0 | 0,9 | 0 | 0,01 | 0,0015 | 0,0031 |
| 8 | Inv | 0 | 0 | 0 | 0 | 0,13 | 0 | 0,98 | 0,02 | 1 | 0,0013 | 0,0026 |
| 9 | Comp | 0,2 0 | 0 | 0 | 0 | 0,10 | 0 | 0,9 | 0 | 0,01 | 0,0013 | 0,0031 |
| 10 | Inv | 0,2 0 | 0 | 0 | 0 | 0,10 | 0 | 0,98 | 0,02 | 1 | 0,0018 | 0,0022 |
| 11 | Inv | 0,2 0 | 0 | 0 | 0 | 0,10 | 0 | 0,95 | 0,05 | 1,8 | 0,0011 | 0,0019 |
| 12 | Inv | 0 | 0 | 0 | 0 | 0,12 | 0 | 0,02 | 0,01 | 3,4 | 0,0012 | 0,0022 |
| 13 | Inv | 0 | 0 | 0,034 | 0 | 0,1 | 0 | 0,7 | 0,3 | 0,01 | 0,0012 | 0,0022 |
| 14 | Inv | 0 | 0 | 0,034 | 0 | 0,1 | 0 | 0,98 | 0,02 | 0,3 | 0,0024 | 0,0027 |
| 15 | Inv | 0 | 0 | 0,034 | 0 | 0,1 | 0 | 0,99 | 0,01 | 0,6 | 0,0018 | 0,0022 |
| 16 | Comp | 0 | 0 | 0,034 | 0 | 0,1 | 0 | 0,97 | 0,03 | 0,6 | <u>0,00007</u> | 0,0022 |
| 17 | Inv | 0 | 0 | 0,05 | 0 | 0,1 | 0 | 0,75 | 0,25 | 0,01 | 0,0008 | 0,0029 |
| 18 | Comp | 0 | 0 | 0,05 | 0 | 0,1 | 0 | 0,75 | 0,25 | 0,03 | <u>0,00008</u> | 0,0021 |
| 19 | Inv | 0 | 0 | 0,05 | 0 | 0,1 | 0 | 0,98 | 0,02 | 0,5 | 0,0015 | 0,0027 |
| 20 | Comp | 0 | 0 | 0,05 | 0 | 0,1 | 0 | 0,99 | 0,01 | 0,5 | <u>0,00007</u> | 0,0024 |
| 21 | Inv | 0 | 0 | 0,067 | 0 | 0,085 | 0 | 0,7 | 0,3 | 0,01 | 0,0015 | 0,0018 |
| 22 | Inv | 0 | 0 | 0,067 | 0 | 0,085 | 0 | 0,97 | 0,03 | 0,1 | 0,0025 | 0,0024 |
| 23 | Inv | 0 | 0 | 0,075 | 0 | 0,085 | 0 | 0,7 | 0,3 | 0,01 | 0,0016 | 0,0028 |
| 24 | Inv | 0 | 0 | 0,075 | 0 | 0,085 | 0 | 0,97 | 0,03 | 0,1 | 0,0022 | 0,0022 |

Ces matériaux ont ensuite fait l'objet de tests. Pour la caractérisation magnétique M(T,H), on a procédé comme précédemment. Les résultats obtenus sont rassemblés dans le tableau 5.

**Tableau 5 - Résultats**

| | Type | Déséquilibre par rapport à la visée de composition | Dépôt d'oxydes de TR sur les parois des creusets | Mesures à 2T | | | |
|---|---|---|---|---|---|---|---|
| | | | | $T_{tr}$ (K) | $\Delta T_{LMH}$ (K) | $\Delta S_{max}$ (J/kg.K) | RCP (J/kg) |
| 5 | Comp | 1 | Très faible | <u>210</u> | 14,4 | 12,5 | 180 |
| 6 | Comp | 1 | 0 | <u>202,5</u> | <u>9</u> | 17 | 153 |
| 7 | Comp. | 1 | 0 | <u>191</u> | <u>7</u> | 26,5 | 185.5 |
| 8 | Inv | 1 | 0 | 240 | 40 | 3,2 | 128 |
| 9 | Comp. | 1 | 0 | <u>183</u> | <u>6</u> | 8,5 | 51 |
| 10 | Inv | 1 | 0 | 256 | 18 | 8 | 144 |
| 11 | Inv | 1 | Très faible | 313 | 27 | 7,5 | 202,5 |
| 12 | Inv | 1 | Très faible | 341 | 12 | 13 | 156 |
| 13 | Inv | 1 | Très faible | 240 | 10 | 13,5 | 135 |
| 14 | Inv | 1 | 0 | 250 | 20 | 10 | 200 |
| 15 | Inv | 1 | 0 | 258 | 32 | 8 | 256 |
| 16 | Comp | <u>0,96</u> | Important | 258 | 32 | 8 | 256 |
| 17 | Inv | 1 | Très faible | 265 | 13,5 | 10 | 135 |
| 18 | Comp | <u>0,98</u> | Important | 265 | 13,5 | 10 | 135 |
| 19 | Inv | 1 | 0 | 299 | 31 | 6 | 186 |
| 20 | Comp | <u>0,97</u> | Important | 299 | 31 | 6 | 186 |
| 21 | Inv | 1 | 0 | 283 | 13 | 10 | 130 |
| 22 | Inv | 1 | 0 | 287 | 20 | 8,5 | 170 |
| 23 | Inv | 1 | 0 | 295 | 14,5 | 8,5 | 123,25 |
| 24 | Inv | 1 | 0 | 301 | 22 | 8 | 176 |

On voit que la carburation permet, à partir du matériau précurseur non encore carburé, de relever significativement la température de transition (de 190-210K à typiquement 240-320K) et la plage de température $\Delta T$ (de 6-14K à typiquement 18 à 40K) tandis que l'entropie échangée maximale $\Delta S_{max}$ reste supérieure à 3J/kg.K. Un apport majeur de l'invention est que l'effet du carbone sur Ttr reste performant en présence de calcium.

On obtient donc un nouveau matériau industriel à haute performance dont la composition visée est stabilisée dans le bain de métal liquide à la composition optimale sans dépôt d'oxydes de terres rares sur les parois réfractaires des fours et ainsi la composition du précurseur fixe le ratio optimal 1:13 entre les terres rares et les autres éléments en substitution, tandis que le recuit ultérieur diffusant basse à moyenne température du carbone vient régler $T_{tr}$ à la valeur exacte visée.

Ainsi, par exemple, avec le matériau n°15 on voit que la transition (258K) est très proche de 0°C, donc très pertinente pour des applications de réfrigération, alors que $\Delta T$ vaut 32K soit une plage de travail effective pour une machine frigorifique d'environ 60K tout à fait intéressante pour abaisser significativement la température du système, tandis que l'entropie magnétique reste à des niveaux aussi élevés que 7 à 10J/kg.K, particulièrement efficaces pour le rendement des machines frigorifiques.

Les contre-exemples n°5-7 et 9 montrent bien que sans la présente de cobalt et/ou d'éléments interstitiels suffisants (C, N, H), les températures de transition sont trop basses (<220K) et même dans certains cas la plage de température de travail est également trop faible.

Un minimum de calcium assure que la quasi-totalité des terres rares comme le lanthane resteront dans le bain liquide et le lingot solidifié, ce qui permet ainsi une très bonne correspondance entre la composition visée et la composition obtenue, et donc des bonnes performances magnétocaloriques. Les alliages n°16, 18 et 20 possèdent très peu de calcium et en conséquence quelques pourcents de l'ensemble des atomes de terres rares se retrouvent sous forme oxyde (dépôts sur les parois du creuset), perdus pour les propriétés magnétocaloriques avec pour conséquence essentielle de dévier du rapport 1:13 entre terres rares et autres éléments du réseau en substitution ce qui entraine une baisse importante des propriétés magnétocaloriques.

A noter que les performances magnétocaloriques des alliages n° 16, 18 et 20 restent encore intéressantes au regard du cahier des charges des propriétés d'usage, mais au regard de l'aptitude à l'élaboration industrielle, leur trop basse teneur en éléments réducteurs rend l'alliage versatile avec une grande variabilité de composition obtenue pour une seule composition visée (déviation réalisé/visé de 0,96 à 0,98 au lieu de 1 sur les trois essais d'alliage n°16, 18 et 20).

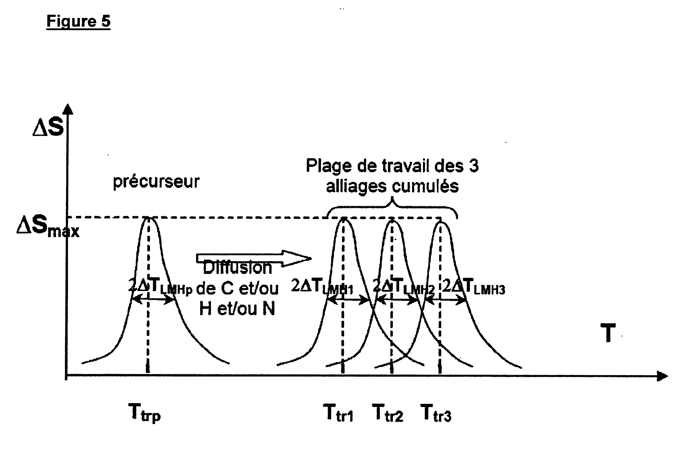

Les matériaux selon l'invention peuvent être utilisés sous forme de mélanges ou chaque composant, représenterait, par exemple, de 5 à 20% du poids total du mélange. La formulation de ce mélange est de préférence faite de façon à présenter une contribution magnétocalorique globale plus étendue que celle d'un seul matériau, chaque composant étant judicieusement choisi de telle sorte que sa température Ttr soit décalée par rapport aux autres composants, comme cela est schématisé en figure 5.

En outre, les matériaux magnétocaloriques selon l'invention présentant ainsi l'avantage de pouvoir régler leurs propriétés par des interstitiels dans un post-traitement thermique de diffusion, puisqu'on peut ainsi avec le même matériau-précurseur, produire une grande variété de produits différents qui présenteront donc des propriétés magnétocaloriques différentes, que l'on pourra ou non associer pour étendre la plage de travail.

Ainsi, l'utilisation conjointe des matériaux finaux n°13, 14 et 15 fabriqués à partir du même précurseur, qui peut être dans ce cas l'alliage n°13 ($La_1[(Fe_{0,966}Co_{0,034})_{0,9}Si_{0,1}]_{13}(C_{0,7}N_{0,3})_{0,01}Ca_{0,0012}O_{0,0022}$) permet de juxtaposer avec recouvrement les plages de travail ($T_{tr} - \Delta T_{LMH} \rightarrow T_{tr} + \Delta T_{LMH}$ ] de chacun des trois matériaux, ce qui permettra d'obtenir un refroidissement magnétocalorique sur une plage continue de température entre 230K et 290K, pertinente pour de nombreuses applications de réfrigérations :

**Tableau 6**

| Alliage N° | Mesures à 2T | | | |
|---|---|---|---|---|
| | $T_{tr}$ (K) | $\Delta T_{LMH}$ (K) | $\Delta S_{max}$ (J/kg.K) | Plage de travail en Tr (en K) |
| 13 | 240 | 10 | 13,5 | 230→250 |
| 14 | 250 | 20 | 10 | 230→270 |
| 15 | 258 | 32 | 8 | 226→290 |

L'invention met donc à disposition un matériau à hautes performances magnétocaloriques, capable d'être produit industriellement de façon optimale et reproductible par réglage précis du rapport de composition des éléments majeurs via l'introduction de réducteur-stabilisateur des terres rares, matériau dont on peut ajuster les performances à partir d'un matériau précurseur via un traitement thermique de diffusion d'interstitiels (C,N,H). En outre, les éléments réducteurs-stabilisateurs des terres rares ne dégradent pas les performances magnétocaloriques.

Les matériaux selon l'invention peuvent en particulier être utilisés pour la fabrication de matériel de réfrigération. En effet, un système à récupération magnétique active a été mis au point. Dans ce système, le champ d'activation de l'effet magnétocalorique est créé par des aimants et se déplace autour du matériau qui échange les calories ou frigories avec un fluide caloporteur circulant de façon inverse à la marche du champ magnétique. Tout cela permet d'envisager des systèmes de réfrigération, thermodynamiquement efficace, industriels ou automobile, par exemple.

Ainsi, les réfrigérateurs utilisant le principe de l'effet magnétocalorique peuvent être des appareils prévus pour la réfrigération domestique (frigidaire de particulier), la réfrigération commerciale comme en grande surface (banque de réfrigération), la réfrigération industrielle (entrepôt frigorifique), la réfrigération technique (liquéfaction de gaz ou cryogénie) et la réfrigération intégrée (composants ou boîtiers électroniques).

Mais l'intégration des matériaux selon l'invention est tout aussi possible dans la technologie des pompes à chaleur, aux applications bien connues. De manière extensive, ces deux types de création/échangeur de chaleur (réfrigérateur, pompe à chaleur) peuvent ainsi être appliqués au conditionnement thermique de véhicules, maisons et appartements, bâtiments, et d'installations industrielles en tous genres.

En outre, les matériaux selon l'invention peuvent être protégés en surface de la corrosion aqueuse d'un éventuel fluide caloporteur par un revêtement obtenu par tout type de procédé type CVD, PVD, sol-gel, lit fluidisé etc...

**Revendications**

**1.** Alliage Fe-Si-La de composition atomique :

$$(La_{1-a-a'}Mm_a TR_{a'})_1[(Fe_{1-b-b'}Co b M_{b'})_{1-x}(Si_{1-c}X_c)_x]_{13}(C_d N_e H_{1-d-e})_y(R)_z(I)_f$$

Mm représentant un mélange de lanthane, cérium, néodyme et praséodyme dans la proportion pondérale de 22 à 26% de La, 48 à 53% de Ce, 17 à 20% de Nd et 5 à 7% de Pr, ledit mélange pouvant en comprendre jusqu'à 1% en poids d'impuretés,

TR représentant un ou plusieurs éléments de la famille des terres rares autres que le lanthane,

M représentant un ou plusieurs éléments de transition de type d des couches 3d, 4d et 5d

X représentant un élément métalloïde choisi parmi Ge, Al, B, Ga et In

R représentant un ou plusieurs éléments choisis parmi Al, Ca, Mg, K et Na,

I représentant un ou deux éléments choisis parmi O et S,

avec :

$$0 \leq a < 0,5 \text{ et } 0 \leq a' < 0,2$$

$$0 \leq b \leq 0,2 \text{ et } 0 \leq b' < 0,4$$

$$0 \leq c \leq 0,5 \text{ et } 0 \leq d \leq 1$$

$$0 \leq e \leq 1 \text{ et } f \leq 0,1$$

$$0,09 \leq x \leq 0,13 \text{ et } 0,002 \leq y \leq 4$$

$$0,00005 \leq z \leq 0,1$$

les indices b, d, e, x et y étant tels que l'alliage satisfait en outre la condition suivante :

$$6,143b(13(1\text{-}x)) + 4,437y[1 - 0,0614(d + e)] \geq 1$$

**2.** Alliage Fe-Si-La selon la revendication 1, dans lequel M représente un ou plusieurs éléments choisis parmi le nickel, le manganèse et le chrome.

**3.** Alliage Fe-Si-La selon la revendication 1 ou 2, dans lequel R représente le calcium.

**4.** Alliage Fe-Si-La selon l'une quelconque des revendications 1 à 3, dans lequel :

$$a = 0, a' = 0, b = 0, b' = 0 \text{ et } c = 0.$$

**5.** Alliage Fe-Si-La selon l'une quelconque des revendications 1 à 3, dans lequel TR représente le cérium et/ou l'yttrium.

**6.** Alliage Fe-Si-La selon l'une quelconque des revendications 1 à 5, dans lequel : d < 0,01.

**7.** Alliage Fe-Si-La selon l'une quelconque des revendications 1 à 3, dans lequel : d ≥ 0,7.

**8.** Poudre d'alliage Fe-Si-La selon l'une quelconque des revendications 1 à 7, dont la granulométrie moyenne est inférieure à 1000 $\mu$m.

**9.** Poudre d'alliage Fe-Si-La selon la revendication 8, dont la granulométrie est inférieure à 500 μm.

**10.** Procédé de fabrication d'une poudre d'alliage selon l'une quelconque des revendications 1 à 7, comprenant les étapes consistant à :

- élaborer un précurseur de l'alliage défini dans les revendications 1 à 7, dont au moins une des teneurs en carbone et/ou azote et/ou hydrogène est inférieure à celle de l'alliage final, y pouvant être égal à 0,
- le couler et le solidifier sous forme de lingot,
- procéder éventuellement à une refusion sous laitier ou sous vide,
- fragmenter le lingot en une poudre de particules,
- procéder à un traitement thermique d'homogénéisation à l'air ou sous gaz protecteur sur l'alliage soit juste avant, soit juste après son fractionnement, et
- procéder à un traitement de diffusion sur ladite poudre d'au moins un des éléments choisis parmi le carbone, l'hydrogène et l'azote, afin d'obtenir une poudre d'alliage présentant la composition finale visée.

**11.** Procédé de fabrication d'une poudre d'alliage selon la revendication 10, comprenant les étapes consistant à :

- couler et solidifier ledit précurseur sous forme de lingot, au moins une des opérations suivantes étant en outre pratiquée :

■ maintenir le lingot fraichement solidifié à une température supérieure à 1300°C mais inférieure au point de fusion, pendant moins de 24 heures,
■ opérer un brassage électromagnétique au cours de la coulée en lingot et lors de la solidification,
■ réchauffer le lingot après sa première solidification à une température supérieure à 1300°C de telle sorte qu'il repasse au moins partiellement à l'état liquide, puis le solidifier à nouveau,

- fragmenter le lingot en une poudre de particules,
- procéder à un traitement de diffusion sur ladite poudre d'au moins un des éléments choisis parmi le carbone, l'hydrogène et l'azote, afin d'obtenir une poudre d'alliage présentant la composition finale visée.

**12.** Procédé de fabrication d'une poudre d'alliage selon l'une quelconque des revendications 10 ou 11, comprenant les étapes consistant à :

- fragmenter ledit lingot en une poudre de particules de taille inférieure à 10 mm
- procéder à un traitement de fragmentation fine et d'homogénéisation sous hydrogène à une température inférieure à 300°C pour obtenir une poudre de particules de taille inférieure à 1000 μm,
- procéder à un traitement de diffusion sur ladite poudre, à une température inférieure à 400°C, d'au moins un des éléments choisis parmi le carbone, et l'azote, afin d'obtenir une poudre d'alliage présentant la composition finale visée.

**13.** Procédé de fabrication d'une poudre d'alliage selon l'une quelconque des revendications 1 à 7, comprenant les étapes consistant à :

- élaborer un précurseur de l'alliage défini dans les revendications 1 à 7, dont au moins une des teneurs en carbone et/ou azote et/ou hydrogène est inférieure à celle de l'alliage final, y pouvant être égal à 0,
- l'atomiser sous forme fondue, sans solidification préalable, afin d'obtenir une poudre de particules et
- procéder à un traitement de diffusion sur ladite poudre d'au moins un des éléments choisis parmi le carbone, l'hydrogène et l'azote, afin d'obtenir une poudre d'alliage présentant la composition finale visée.

**14.** Procédé de fabrication d'alliage selon l'une quelconque des revendications 1 à 7, comprenant les étapes consistant à :

- élaborer un précurseur de l'alliage défini dans les revendications 1 à 7, au moins une des teneurs en carbone et/ou azote et/ou hydrogène est inférieure à celle de l'alliage final, y pouvant être égal à 0,
- le solidifier sous forme de ruban, de fil ou de poudre de particules par hypertrempe et
- procéder à un traitement de diffusion sur ledit ruban, ledit fil ou ladite poudre d'au moins un des éléments choisis parmi le carbone, l'hydrogène et l'azote, afin d'obtenir un ruban, un fil ou une poudre d'alliage présentant la composition finale visée.

**15.** Poudre d'alliages Fe-Si-La selon l'une quelconque des revendications 1 à 7, comprenant au moins deux alliages différents $A_1$ et $A_2$ selon l'une quelconque des revendications 1 à 7, choisis de sorte que les températures de transition $Ttr_1$, $Ttr_2$ et les largeurs de pics à mi-hauteur $\Delta T_{LMH1}$, $\Delta T_{LMH2}$ de leurs courbes respectives de variation d'entropie magnétique $\Delta S_{m1}(T)$ et $\Delta S_{m2}(T)$ soient telles que leurs plages de travail respectives ($Ttr_1 - \Delta T_{LMH1}$; $Ttr_1 + \Delta T_{LMH1}$) et ($Ttr_2 - \Delta T_{LMH2}$ ; $Ttr_2 + \Delta T_{LMH2}$) se recoupent.

**16.** Poudre d'alliages selon la revendication 15, dans laquelle lesdits alliages $A_1$ et $A_2$ sont obtenus à partir du même matériau précurseur P soumis à deux traitements différents de diffusion d'au moins un des éléments choisis parmi le carbone, l'hydrogène et l'azote.

**17.** Matériau précurseur tel que défini dans l'une quelconque des revendications 10 à 14.

**18.** Utilisation d'un alliage selon l'une quelconque des revendications 1 à 7 ou d'une poudre d'alliages selon l'une quelconque des revendications 8, 9, 15 ou 16, pour la fabrication de matériels de réfrigération.

**19.** Utilisation d'un alliage selon l'une quelconque des revendications 1 à 7 ou d'une poudre d'alliages selon l'une quelconque des revendications 8, 9, 15 ou 16 pour la fabrication de pompes à chaleur.

## Figure 1

## Figure 2

## Figure 3

## Figure 4

**Figure 5**

**Europäisches Patentamt**
**European Patent Office**
**Office européen des brevets**

# RAPPORT DE RECHERCHE EUROPEENNE

Numéro de la demande

EP 07 29 1522

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2006/107042 A (HITACHI METALS LTD [JP]; TANIGAWA SHIGEHO [JP]) 12 octobre 2006 (2006-10-12) * alinéas [0006], [0012], [0027], [0028], [0030]; revendication 1 * & EP 1 867 744 A (HITACHI METALS LTD [JP]) 19 décembre 2007 (2007-12-19) ----- | 1-19 | INV. H01F1/01 B22F9/04 |
| X | JP 2006 283074 A (HITACHI METALS LTD) 19 octobre 2006 (2006-10-19) * alinéas [0009] - [0011]; exemple 1 * ----- | 1-19 | |
| X | CHEN YUAN-FU ET AL: "Magnetism and magnetic entropy change of LaFe11.6Si1.4Cx (x=0-0.6) interstitial compounds" JOURNAL OF APPLIED PHYSICS, AMERICAN INSTITUTE OF PHYSICS. NEW YORK, US, vol. 93, no. 2, 15 janvier 2003 (2003-01-15), pages 1323-1325, XP012058883 ISSN: 0021-8979 * abrégé * * page 1323, colonne 1, alinéa 2; figure 4 * ----- | 1,4,6-9, 15,16, 18,19 | |

DOMAINES TECHNIQUES RECHERCHES (IPC)

H01F
F25B
B22F

Le présent rapport a été établi pour toutes les revendications

| Lieu de la recherche | Date d'achèvement de la recherche | Examinateur |
|---|---|---|
| La Haye | 30 octobre 2008 | Primus, Jean-Louis |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...............................................................
& : membre de la même famille, document correspondant

EPO FORM 1503 03.82 (P04C02)

Europäisches
Patentamt

European
Patent Office

Office européen
des brevets

Numéro de la demande

EP 07 29 1522

## REVENDICATIONS DONNANT LIEU AU PAIEMENT DE TAXES

La présente demande de brevet européen comportait lors de son dépôt les revendications dont le paiement était dû.

☐ Une partie seulement des taxes de revendication ayant été acquittée dans les délais prescrits, le présent rapport de recherche européenne a été établi pour les revendications pour lesquelles aucun paiement n'était dû ainsi que pour celles dont les taxes de revendication ont été acquittées, à savoir les revendication(s):

☐ Aucune taxe de revendication n'ayant été acquittée dans les délais prescrits, le présent rapport de recherche européenne a été établi pour les revendications pour lesquelles aucun paiement n'était dû.

## ABSENCE D'UNITE D'INVENTION

La division de la recherche estime que la présente demande de brevet européen ne satisfait pas à l'exigence relative à l'unité d'invention et concerne plusieurs inventions ou pluralités d'inventions, à savoir:

voir feuille supplémentaire B

[X] Toutes les nouvelles taxes de recherche ayant été acquittées dans les délais impartis, le présent rapport de recherche européenne a été établi pour toutes les revendications.

☐ Comme toutes les recherches portant sur les revendications qui s'y prêtaient ont pu être effectuées sans effort particulier justifiant une taxe additionnelle, la division de la recherche n'a sollicité le paiement d'aucune taxe de cette nature.

☐ Une partie seulement des nouvelles taxes de recherche ayant été acquittée dans les délais impartis, le présent rapport de recherche européenne a été établi pour les parties qui se rapportent aux inventions pour lesquelles les taxes de recherche ont été acquittées, à savoir les revendications:

☐ Aucune nouvelle taxe de recherche n'ayant été acquittée dans les délais impartis, le présent rapport de recherche européenne a été établi pour les parties de la demande de brevet européen qui se rapportent à l'invention mentionnée en premier lieu dans les revendications, à savoir les revendications:

☐ Le present rapport supplémentaire de recherche européenne a été établi pour les parties de la demande de brevet européen qui se rapportent a l'invention mentionée en premier lieu dans le revendications (Règle 164 (1) CBE)

Europäisches
Patentamt

European
Patent Office

Office européen
des brevets

**ABSENCE D'UNITÉ D'INVENTION
FEUILLE SUPPLÉMENTAIRE B**

Numéro de la demande

EP 07 29 1522

La division de la recherche estime que la présente demande de brevet européen ne satisfait pas à l'exigence
relative à l'unité d'invention et concerne plusieurs inventions ou pluralités d'inventions, à savoir :

    1. revendications: 1-18

        alliage LaFeSi connu, poudre d'alliage LaFeSi connue,
        procédé de fabrication d'alliage LaFeSi connu, mélange de
        poudres d'alliage LaFeSi connu, matériau précurseur
        d'alliage LaFeSi connu, utilisation connue d'un alliage
        LaFeSi dans des matériels de refrigération
              ---

    2. revendications: 1-17,19

        alliage LaFeSi connu, poudre d'alliage LaFeSi connue,
        procédé de fabrication d'alliage LaFeSi connu, mélange de
        poudres d'alliage LaFeSi connu, matériau précurseur
        d'alliage LaFeSi connu, utilisation connue d'un alliage
        LaFeSi dans des pompes à chaleur
              ---

EPO FORM P0402

**ANNEXE AU RAPPORT DE RECHERCHE EUROPEENNE
RELATIF A LA DEMANDE DE BREVET EUROPEEN NO.**

EP 07 29 1522

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-10-2008

| Document brevet cité au rapport de recherche | Date de publication | Membre(s) de la famille de brevet(s) | Date de publication |
|---|---|---|---|
| WO 2006107042 A | 12-10-2006 | CN 101155938 A<br>EP 1867744 A1 | 02-04-2008<br>19-12-2007 |
| EP 1867744 A | 19-12-2007 | CN 101155938 A<br>WO 2006107042 A1 | 02-04-2008<br>12-10-2006 |
| JP 2006283074 A | 19-10-2006 | AUCUN | |

EPO FORM P0460

Pour tout renseignement concernant cette annexe : voir Journal Officiel de l'Office européen des brevets, No.12/82